# EUROPÄISCHE PATENTSCHRIFT

(11) **EP 2 684 236 B1**
(45) Veröffentlichungstag und Bekanntmachung des Hinweises auf die Patenterteilung: **22.04.2015**
(21) Anmeldenummer: 12708523.1
(22) Anmeldetag: 02.03.2012
(51) Int. Cl.: H01M 2/14, H01M 2/18

(54) **ZU EINEM STAPEL ZUSAMMENGEFASSTE BATTERIEZELLEN-DISTANZPLATTEN**
BATTERY-CELL SPACING PLATES COMBINED TO FORM A STACK
PLAQUES D'ESPACEMENT DE CELLULES DE BATTERIE ASSEMBLÉES EN UNE PILE

(30) Priorität: 10.03.2011 DE 202011000543 U; 24.03.2011 DE 102011001536
(43) Veröffentlichungstag der Anmeldung: 15.01.2014
(73) Patentinhaber: Hagemann-Systems GmbH, 38104 Braunschweig (DE)
(72) Erfinder: TRIMBORN, Jens, 42349 Wuppertal (DE)
(74) Vertreter: Müller, Enno
(86) Internationale Anmeldenummer: PCT/EP2012/053627
(87) Internationale Veröffentlichungsnummer: WO 2012/119942

(56) Entgegenhaltungen:
- EP-A1- 0 182 114
- WO-A1-2010/084624
- DE-A1- 2 060 746
- DE-A1- 4 037 882
- DE-A1- 4 128 770
- DE-A1-102008 037 040
- DE-U1-202004 020 604
- US-A1- 2004 142 238

## Beschreibung

Die Erfindung betrifft zu einem Stapel zusammengefasste Batteriezellen-Distanzplatten, wobei eine Distanzplatte eine Vielzahl von in Längsrichtung der Distanzplatte fluchtende Profilausformungen aufweist, wobei weiter eine Profilausformung insbesondere als Rechteckausformung gebildet ist, durch bezogen auf einen Querschnitt senkrecht zu einer Ebenenerstreckung der Distanzplatte mehrere, bevorzugt unter Einschluss eines Winkels zueinander verlaufende Profilabschnitte, und wobei darüber hinaus zumindest ein Grund-Profilabschnitt parallel zu der Ebene, in der sich die Distanzplatte erstreckt, verläuft, und Ausformungs-Profilabschnitte sich in einem Winkel zu der Ebene erstrecken.

Derartige Distanzplatten sind bereits in verschiedener Hinsicht bekannt geworden. So ist etwa auf die DE 10 2008 037 040 A1 zu verweisen. Darüber hinaus auch auf die DE 20 2004 020 604 U1 und die DE 10 2008 037 039 A1. Batteriezellen-Distanzplatten können beispielsweise dazu genutzt sein, eine Mehrzahl von in ein Wannenteil eingesetzte Batteriezellen distanziert zueinander in dem Wannenteil festzusetzen. Zudem können sie auch zur distanzierten Festsetzung der Elektrolytplatten einer Batteriezelle selbst verwendet sein.

Weiter ist zum Stand der Technik auf die DE 40 37 882 A1, EP 182114 A1, die US 2004/142238 A1, die WO2010/084624 A1, die DE 4128 770 A1, die DE 2060746 A1 und die DE 10 2008 037 040 A1 zu verweisen.

Aufgrund der strukturierten Ausbildung der Distanzplatten, mit der erreicht wird, dass über die Materialdicke der Distanzplatte hinaus eine Beabstandung im eingesetzten Zustand erreicht wird, ergibt sich ein Transportproblem, da relativ viel Raum durch aufeinanderliegende Batteriezellen-Distanzplatten in Anspruch genommen wird.

Ausgehend von der DE 20 2004 020 604 U1 beschäftigt sich die Erfindung mit der Aufgabe, eine günstige Zusammenfassung von Batteriezellen-Distanzplatten in einem Stapel anzugeben beziehungsweise hierfür geeignete Distanzplatten zur Verfügung zu stellen.

Eine mögliche Lösung der Aufgabe ist nach einem ersten Erfindungsgedanken bei einem Gegenstand gegeben, bei dem der Stapel bei insgesamt drei oder mehr darin zusammengefassten aufeinanderliegenden, eingeschachtelten Distanzplatten jedenfalls zwei Distanzplatten unterschiedlicher Abmessungen zumindest bezüglich der Länge der Grund-Profilabschnitte aufweist, und im Querschnitt eine Distanzplatte erster Abmessung beidseitig von Distanzplatten zweiter Abmessung überdeckt ist. Erfindungsgemäß sind in einem Stapel von Distanzplatten Distanzplatten unterschiedlicher Ausbildung zusammengefasst. Die unterschiedliche Ausbildung zumindest im Hinblick auf die Länge der Grund-Profilabschnitte ist dazu genutzt, eine günstige Einschachtelung zu erreichen. Dem liegt die Erkenntnis zu Grunde, dass im Hinblick auf den Einsatzzweck es nicht von Bedeutung ist, ob die zur Distanzierung der genannten Elemente verwendeten Distanzplatten unter sich formgleich sind. Selbst wenn man dies für erforderlich hielte, könnte nach erfolgtem Transport und vor einem Einbau noch eine entsprechende Sortierung vorgenommen werden. Dadurch, dass eine Distanzplatte erster Abmessung in dem betrachteten Querschnitt des Stapels oben und unten von Distanzplatten zweiter Abmessung überdeckt ist, ist die günstige Einschachtelbarkeit beidseitig nutzbar.

Insbesondere beziehen sich die hier beschriebenen Ausgestaltungen auf Distanzplatten, bei welchen keine Einbuchtung in einen Winkelinnenraum von Profilabschnitten ragend ausgebildet sind. Es werden also bevorzugt Anordnungen und Ausgestaltungen von Distanzplatten zugrunde gelegt, die entgegen der Offenbarung der DE 10 2008 037039 A1 keine derartigen Einbuchtungen aufweisen. Vielmehr sind bevorzugt die Profilabschnitte in Erstreckungsrichtung der Profilabschnitte ohne Unterbrechung streng fluchtend ausgebildet.

Insbesondere bei einer Rechteckausformung schließen die Profilabschnitte in der Regel einen Winkel miteinander ein. Es kann aber bspw. ein gerundeter Übergang zwischen Profilabschnitten vorliegen oder insgesamt eine beispielsweise kreisabschnittsförmige oder parabelförmige Gestaltung der Profilausformung gegeben sein.

Nach Einsatz einer solchen Batteriezellen-Distanzplatte in die genannte Wanne oder zwischen zwei Elektrolytplatten werden die Distanzplatten praktisch nur noch relativ gleichmäßig quer zu ihrer Ebenenerstreckung beansprucht. Es kann nun aber vorteilhaft sein, die Distanzplatten quer zu der Ebenenerstreckung brechbar vorzusehen, wie weiter unten noch beschrieben. Damit können sie vor dem Einsetzen beispielsweise an eine gewünschte Breite, die nur genutzt werden kann, durch einfaches, werkzeugloses Abbrechen angepasst werden. Durch die Zusammenfassung in einem Stapel wie hier beschrieben ergibt sich in dieser Hinsicht auch eine günstige Versteifung während des Transports, so dass hierbei eventuell auftretende, möglicherweise eine nicht beabsichtigte Brechung herbeiführende Biegebeanspruchungen vorteilhaft aufgefangen werden können.

Ein Grund-Profilabschnitt kann länger sein als der Spitzen-Profilabschnitt. Der Stapel kann prinzipiell aus gleichen Distanzplatten bestehen, die nur um 180° verdreht gegeneinander übereinander gelegt sind. Dadurch, dass die Grundund Spitzenprofilabschnitte, die bevorzugt beide sich parallel zu einer Erstreckungsebene der Distanzplatte erstrecken, unterschiedlich lang sind, ist diese Einschachtelbarkeit gegeben. Die Einschachtelbarkeit bedeutet bevorzugt, dass die Profilplatten jedenfalls im Bereich der Grund- und/ oder Spitzen-Profilabschnitte in dem Stapel flächenmäßig unmittelbar aufeinanderliegen.

Derartige Distanzplatten können in einer Batteriezelle oder einer Zusammenfassung von Batteriezellen angeordnet sein. Es handelt sich um Batteriezellen mit einer Mehrzahl von Elektrodenplatten, wobei im Hinblick auf eine horizontale Distanzierung der Elektrodenplatten zueinander oder der Elektrodenplatten zu einer Zellenwandung solche Distanzplatten eingesetzt sind. Dadurch, dass die genannte Ineinanderschachtelung möglich ist, eröffnen derartige Distanzplatten eine günstige Möglichkeit, auch nicht dem Grundmaß der Distanzplatte entsprechende Zwischenräume auszugleichen. Dadurch, dass sie in der beschriebenen Weise ineinandergeschachtelt werden können, können Abstände ausgeglichen werden, die auch nur im Bereich einer Höhe und zusätzlich einer Wandstärke der Distanzplatte liegen. Insbesondere können - nur - mit Distanzplatten, welche geometrisch übereinstimmend gebildet sind, diese Ausgleichsmöglichkeiten erzielt werden.

Es ist bevorzugt, dass eine Gesamthöhe der Distanzplatten erster und zweiter Abmessung, gemessen quer zu der Ebene, in der sich die Distanzplatten erstrecken, gleich ist. Hierbei ist die Gesamthöhe gemessen ausgehend von einem Grund-Profilabschnitt bis zu einem Spitzenbereich einer Profilausformung. Dieser Spitzenbereich kann auch wiederum durch einen sich parallel zu der Ebene, in der die Distanzplatte sich erstreckt, verlaufenden Spitzen-Profilabschnitt gebildet sein. Der Spitzen-Profilabschnitt kann aber auch im Sinne einer im Querschnitt winkeligen oder gebogenen Spitze gestaltet sein.

Weiter ist bevorzugt, dass ein Stapel aus vier oder mehr Distanzplatten besteht, wobei zwei Distanzplatten gleicher Abmessungen unmittelbar übereinander, jedoch um eine Profilausformung versetzt zueinander angeordnet sind. Diese versetzte Anordnung von Distanzplatten gleicher Abmessung ist dann günstig durchführbar, wenn in dem genannten Querschnitt diese zwei Distanzplatten gegeneinander ausgerichtet sind.

Im Hinblick auf Grund-Profilabschnitte und Spitzen-Profilabschnitte unterschiedlicher Länge, in Ebenenerstreckung der Distanzplatte, kann von einem "Unten" und einem "Oben" gesprochen werden, wobei "Unten" bspw. die Seite ist, in der sich die Grund-Profilabschnitte (längerer Abmessung) erstrecken. In dieser Hinsicht ist bei den zwei Distanzplatten gleicher Abmessungen die eine mit den Grundprofilabschnitten oben, die andere mit den Grundprofilabschnitten unten in dem Stapel zusammengefasst.

Bei einer angesprochenen Versetzung von Distanzplatten gleicher Abmessung kann sich ergeben, dass an den Rändern des Stapels sich jeweils ein Abschnitt ergibt, in dem nur zwei Distanzplatten übereinander liegen. Dieser Abschnitt eines bspw. Viererstapels, in dem nur zwei Distanzplatten übereinander liegen ist dann weiter bevorzugt durch zwei Distanzplatten unterschiedlicher Abmessung gegeben.

Die Distanzplatten können in den Grund-Profilabschnitten und/ oder einem Profilabschnitt einer Profilausformung eine Schwächung, bspw. Einkerbung, zur Nutzung als Sollbruchstelle aufweisen. So können zu breite Distanzplatten auf ein geeignetes Maß abgebrochen werden.

Die Distanzplatten können aus unterschiedlichem Kunststoff bestehen, bspw. Polypropylen oder Polystyrol, auch Styrol-Butadiencopolymeren. Es handelt sich bevorzugt um im Kunststoff-Extrusionsverfahren hergestellte Teile.

Auch kann eine Distanzplatte im Querschnitt eine Abwinkelung aufweisen, an einer Stelle, die in einem mittleren Bereich der Distanzplatte in eine Profilausformung übergeht, wobei die Abwinkelung aber nur eine geringe Erstreckung in Ausformungsrichtung aufweist. Beispielsweise ein Zehntel bis 1/5 der in einem Mittenbereich der Distanzplatte gegebenen Gesamthöhe aufweist. Bevorzugt ist auch, dass die Distanzplatten in der beschriebenen Weise zu einem Stapel von genau vier Distanzplatten zusammengefasst werden und dass eine Vielzahl solcher Vierer-Stapel zum Transport auf einer Palette oder in einem Behältnis zusammengefasst werden. Beispielsweise können sie zur weiteren Transportsicherung auch mit einer Folie, insbesondere auch Schrumpffolie, umwickelt werden.

Nachstehend ist die Erfindung des Weiteren anhand der beigefügten Zeichnung, die jedoch lediglich Ausführungsbeispiele darstellt, erläutert. Hierbei zeigt:
- Fig. 1: einen Querschnitt durch eine Distanzplatte mit Rechteckprofil erster Abmessung;
- Fig. 2: einen Querschnitt gemäß Figur 1 einer Distanzplatte zweiter Abmessung;
- Fig. 3: eine perspektivische Ansicht einer Zusammenfassung der Distanzplatten gemäß Figur 1 und Figur 2;
- Fig. 4a - 4e: Querschnitte durch Stapel von Distanzplatten;
- Fig. 5: eine Ineinanderschachtelung von zwei Distanzplatten identischer Geometrie; und
- Fig. 6: eine beispielhafte Anordnung von Distanzplatten in einer Batteriezelle, in einer Ausschnitts-Querschnittsdarstellung.

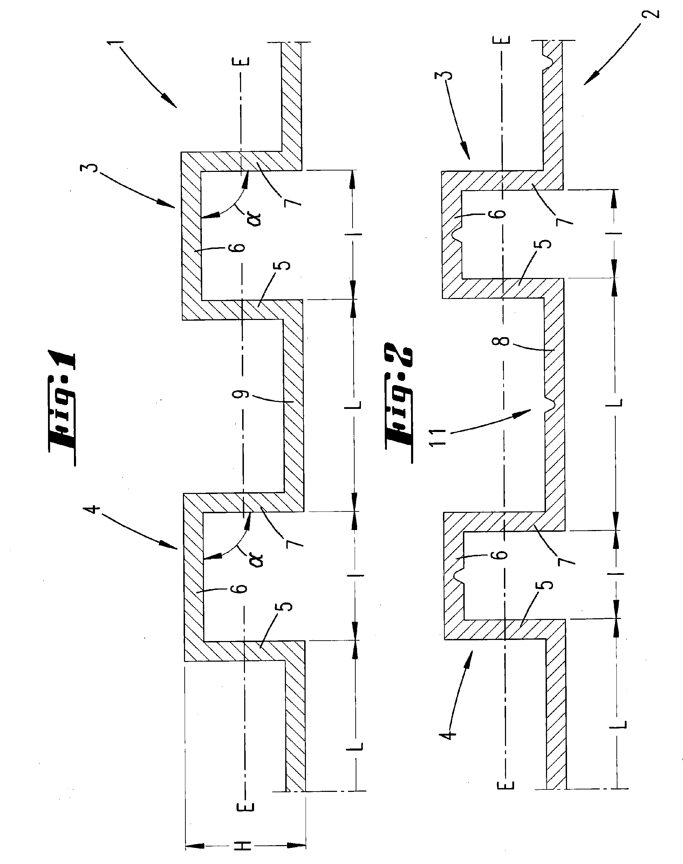

Mit Bezug zu den Figuren 1 und 2 sind Batteriezellen-Distanzplatten 1, 2 dargestellt, wie sie beispielsweise in dem hier beschriebenen Zusammenhang zur Anwendung kommen können.

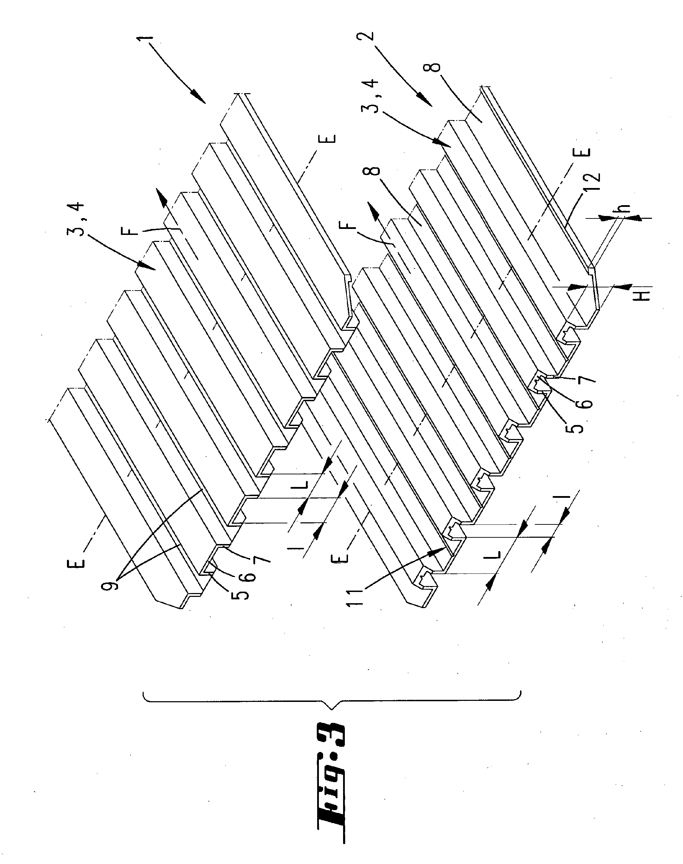

Die Distanzplatten 1, 2 weisen jeweils eine Vielzahl von in Längsrichtung einer jeweiligen Distanzplatte fluchtend zueinander ausgebildete Profilausformungen 3,4 auf. Für die Zwecke dieser Beschreibung ist die Erstreckung der Distanzplatten 1, 2 in der Fluchtrichtung F, siehe Figur 3, der Profilausformungen 3, 4 als Längsrichtung der Distanzplatten 1, 2 bezeichnet und die Richtung quer hierzu als Breite bzw. Querrichtung der Distanzplatte 1, 2.

Eine Profilausformung 3,4 ist bevorzugt, wie auch den Ausführungsbeispielen dargestellt, als Rechteckausformung gebildet.

Eine Profilausformung 3,4 setzt sich aus mehreren Profilabschnitten 5, 6, 7 zusammen. Bei den dargestellten Ausführungsbeispielen schließen benachbarte Profilabschnitte 5, 6, 7 jeweils einen Winkel α im Querschnitt miteinander ein, der kleiner ist als 180°. Speziell bei den dargestellten Rechteckprofilen ist dieser Winkel annähernd oder gleich 90°.

Bezogen auf die Darstellungen der Figuren 1 bzw. 2 ist zwischen Grund-Profilabschnitten 8, 9 und den weiteren Profilabschnitten 5 bis 7 unterschieden.

Die Grund-Profilabschnitte 8, 9 sind diejenigen Profilabschnitte, welche sich zwischen zwei Profilausformungen 3, 4 erstrecken und zudem parallel zu einer Erstreckungsebene E der Distanzplatte 1, 2 verlaufen. Die Erstreckungsebene ist in Figur 1 beispielsweise als Profilmittenebene, bezogen auf die Querschnittsdarstellung, wiedergegeben. Sie entspricht der Mitte einer Gesamthöhe H, die von der Außenfläche eines Grund-Profilabschnittes 9 bis zu dem hier einen Spitzenbereich der Profilausformung 3 bzw. 4 darstellenden Profilabschnitt 6 abgetragen ist. Auch die Profilabschnitte 6 verlaufen bei den Ausführungsbeispielen parallel zu der Erstreckungsebene E.

Ein Grund-Profilabschnitt 8,9 weist eine Länge L auf und ein Profilabschnitt 6 eine Länge 1. Die Länge L ist zwischen zwei den jeweiligen Übergang zu einem im Winkel verlaufenden Profilabschnitt 5 beziehungsweise 7 bildenden Ecken abgetragen, während die Länge 1 parallel zu einer durch den Grund-Profilabschnitt gehenden Ebene dem freien Abstand zwischen diesen Ecken entspricht.

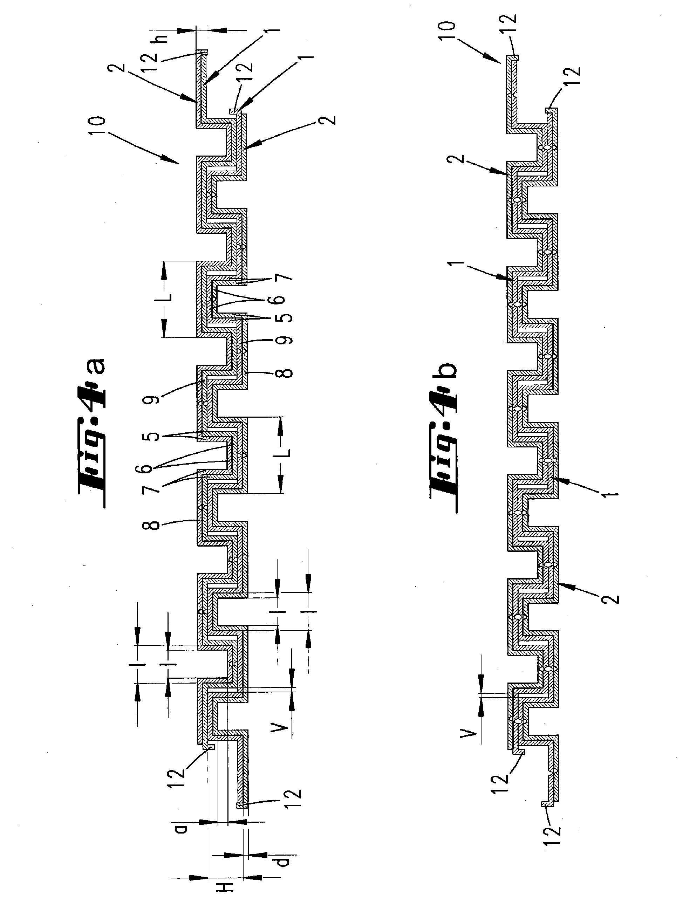

Es ist auch möglich, dass jedenfalls bei einer der in einem Stapel 10 gemäß einer der Figuren 4a bis 4e zusammengefassten Distanzplatten 1, 2, die Länge L eines Grund-Profilabschnittes 8 gleich ist der Länge 1 des Profilabschnittes 6. In einem solchen Fall ist es nicht weiter von Bedeutung, welcher der beiden Profilabschnitte 8 bzw. 6 als Grund-Profilabschnitt bezeichnet ist.

Bevorzugt ist, dass bei beiden Distanzplatten 1, 2 der Grund-Profilabschnitt 8, 9 eine größere Länge L aufweist als der den Spitzenbereich einer Profilausformung 3, 4 bildende Profilabschnitt 6.

Weiter ist zu erkennen, dass eine Batterie-Distanzplatte 1 Einkerbungen 11 aufweist, die zum einfachen Verkürzen einer Breite einer Batterie-Distanzplatte 1 bzw. 2 genutzt sein können.

Wie insbesondere auch der Darstellung der Figuren 3 und 4a bis 4e zu entnehmen ist, kann eine Batterie-Distanzplatte 1 bzw. 2 randseitig eine Abwinkelung 12 aufweisen. Bevorzugt ist, dass dieselbe Distanzplatte 1 bzw. 2 an ihrem einen Längsrand die Abwinkelung 12 aufweist, an dem anderen Längsrand aber plattenförmig eben ausläuft.

Eine Abwinkelung 12 kann eine Höhe h aufweisen, die etwa einem Zehntel bis einem Drittel der Gesamthöhe H jeweils entspricht.

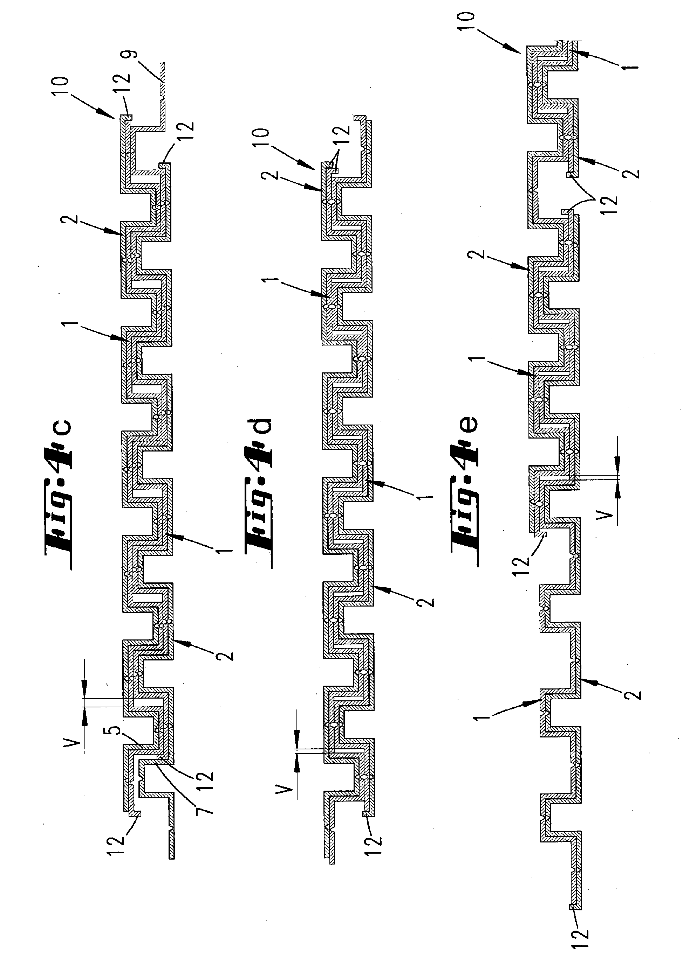

Wie weiter aus Figur 4 ersichtlich, sind in dem Stapel 10 Distanzplatten 1 einer ersten Abmessung und Distanzplatten 2 einer zweiten Abmessung eingeschachtelt zusammengefasst. In der Mitte liegen - jedoch umgekehrt ausgerichtet -, zwei Distanzplatten 2 zweiter Abmessung unmittelbar aufeinander, während bei dem dargestellten Stapel 10 die oberste und unterste Distanzplatte jeweils eine Distanzplatte erster Abmessung ist.

Die Ineinanderschachtelung ist insbesondere dadurch erreicht, dass in Bezug auf den Stapel 10 mit den dort zusammengefassten vier Distanzplatten 1, 2 ein Profilabschnitt 6, der einen Spitzenbereich der Profilausformung bildet, sowohl bezogen auf die oberste, sowie auf die unterste Distanzplatte 1, sich im zusammengefassten Zustand zumindest auf der Höhe des Profilabschnittes 6 der gegenüberliegenden äußersten Distanzplatte 1 befindet oder, wie beim Ausführungsbeispiel, jenseits dieser Höhe. Es ergibt sich in dem Stapel bezüglich dieser Profilabschnitte 6 der beiden äußersten Platten ein Übergriffabstand a.

Dieser Übergriffabschnitt a kann sich entsprechend zwischen Null und einem Vielfachen, beispielsweise dem 3- bis 5-fachen einer Materialdicke d einer Distanzplatte 1, 2 erstrecken.

Die Materialdicke einer solchen Distanzplatte kann sich beispielsweise zwischen 0,5 und 2 mm bewegen. Bevorzugt im Bereich von 1 bis 1,5 mm.

Eine Länge L kann sich beispielsweise zwischen 15 und 30 mm erstrecken, eine Länge 1 beispielsweise zwischen 5 und 15 mm.

Die Stapel gemäß den Figuren 4b bis 4e entsprechen grundsätzlich dem Stapel gemäß Figur 4a, jedoch mit folgenden Besonderheiten. Bei dem Stapel der Figur 4b sind die beiden Distanzplatten in ihrer Übereinanderlage gegenüber dem Stapel 4a vertauscht. Somit ergeben sich an der einen Randseite, in Figur 4b der rechten Randseite, bei den beiden äußersten Distanzplatten 2 aufeinander zuweisende Abwinkelungen 12. Diese Abwinkelungen 12 sind bei dem Ausführungsbeispiel, wie aber auch bevorzugt im Rahmen der Anmeldung, jeweils mit einer solchen Höhe h ausgebildet, dass die Materialdicke d der unmittelbar darin einliegenden weiteren Distanzplatte 1 übertroffen ist. An dem anderen Rand des Stapels, bei der Darstellung gemäß Figur 4b, also dem linken Rand, weisen die beiden inneren Distanzplatten 1 entsprechend aufeinander zuweisende Abwinkelungen 12 auf. Zudem ist zu erkennen, dass die jeweiligen zwei untersten und zwei obersten Distanzplatten 1, 2 zwar nicht gegeneinander, wohl aber zusammengefasst gegenüber den unteren Distanzplatten 1, 2 um das Doppelte eines Verschiebeabstandes V zueinander bewegbar sind. Dies gibt eine gewünschte Seitenflexibilität innerhalb der so geschaffenen Stapel. Der Verschiebeabstand V ist bevorzugt, ausgehend von einem Maß, das etwa der Hälfte der Materialdicke d entspricht, bis hin zu dem Zehnfachen oder mehr der Materialdicke d eingestellt. Diese Einstellung ist ersichtlich durch die jeweils gewählten Abmessungen L bzw. 1 zu erreichen.

Bei der Darstellung der Figur c ist der Verschiebeabstand V nur einseitig jeweils gegeben, da insoweit bereits eine Verschiebung vorgenommen wurde.

Dieser Verschiebeabstand V ist auch unabhängig von einem konkreten Ausführungsbeispiel grundsätzlich für einen solchen Stapel von Bedeutung.

Bei dem in Fig. 4c gezeigten Stapel ist zudem die untere Distanzplatte 1 so weit - in der Zeichnung nach links - seitlich versetzt, dass die Abwinkelung 12 zwischen zwei vertikalen Profilabschnitten 5, 7 der darüber liegenden Distanzplatte 1 bzw. der darunter liegenden Distanzplatte 2 eingefasst ist.

Zudem ist auf der einen Seite randseitig der Grund-Profilabschnitt 9 der unteren Distanzplatte 1 alleine vorragend angeordnet. In vertikaler Projektion befindet sich über einen weiten Bereich des Grund-Profilabschnittes 9 kein weiterer Teil einer weiteren Profilplatte. In gleicher Weise ist auf der gegenüberliegenden Randseite in dem Stapel der Figur 4c der Grund-Profilabschnitt 9 der unteren Distanzplatte 2 vorragend angeordnet. Das Maß des Vorragens beträgt bevorzugt ein Zehntel bis zu einer gesamten Länge L oder auch darüber hinaus.

Bei dem Stapel gemäß Figur 4d sind in gleicher Weise Profilabschnitte 9, bezüglich der unteren Distanzplatte 1 auch mit der Abwinkelung 12, da an dieser Seite vorgesehen, vorragend ausgebildet. Hier jedoch in Übereinanderlage jeweils zu der weiteren unmittelbar darunter bzw. darüber befindlichen Profilplatte 1 bzw. 2. Trotz der insoweit gegebenen Versetzung der Profilplatten in Querrichtung gegeneinander ist doch durch die unmittelbare Übereinanderlage im Randbereich dort noch eine wesentliche Stabilitätserhöhung erreicht. Auch hier beträgt das Maß des Vorragens bevorzugt ein Zehntel bis eine Länge L oder auch mehr.

Bei dem Stapel gemäß Figur 4e sind die Zusammenfassungen von unteren und oberen Distanzplatten 1, 2 in Querrichtung so gegeneinander versetzt, dass zwei nebeneinanderliegende (vgl. unterste Distanzplatte) Distanzplatten 2 mit darüber befindlicher Distanzplatte 1, also ein "Zweier-Stapel", durch einen darüber liegenden "Zweier-Stapel" von Distanzplatten 1, 2 zusammengehalten ist. Entsprechend ergibt sich über einen Teil der Breite dieses Stapels eine Viererlage, in der Mitte, wo die beiden unteren jeweils zusammengefassten Distanzplatten 1 und 2 aufeinander zu gerichtet enden, eine Zweier-Lage als Brücke und dann wieder über einen Teil der Breite unmittelbar anschließend eine Vierer-Lage, bis in Breitenrichtung dann die beiden oberen zusammengefassten Distanzplatten 1, 2 wieder enden. So können auf einer breiten Unterlage auch günstig nebeneinander liegende Distanzplatten zusammengehalten werden. Auch wenn man mehrere derartige Stapel übereinander anordnet, ergibt sich auf Grund einer nur geringen Verbiegungsmöglichkeit im Randbereich, zudem durch die Doppellagigkeit dort, eine ausreichende Stabilität, um auch die Distanzplatten in dieser Anordnung sicher transportieren zu können.

Die hier angegebenen Bereiche bzw. Wertebereiche schließen hinsichtlich der Offenbarung auch sämtlich Zwischenwerte ein, insbesondere in ¹/₁₀-Schritten der jeweiligen Dimension, ggf. dimensionslos, beispielsweise ¹/₁₀ Millimeter oder Grad, einerseits zur Eingrenzung der genannten Bereichsgrenzen von unten und/ oder oben, alternativ oder ergänzend aber auch im Hinblick auf die Offenbarung eines oder mehrerer singulärer Werte aus einem jeweilig angegebenen Bereich.

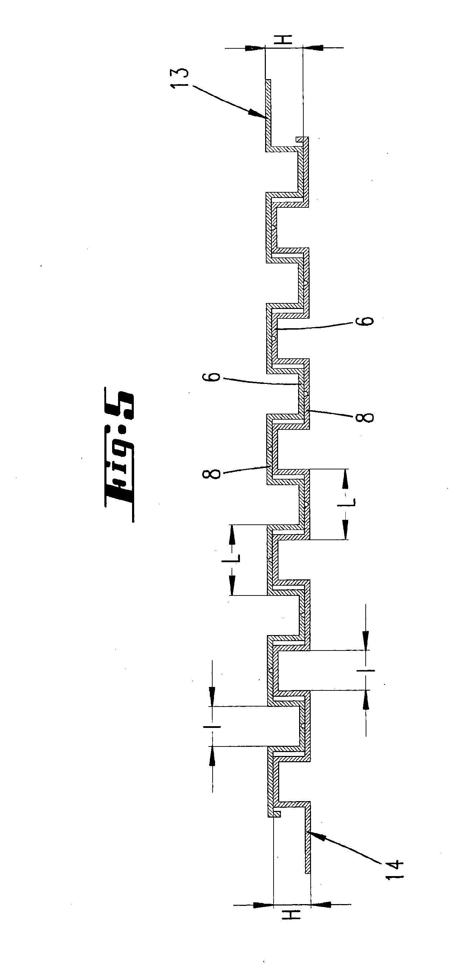

Mit Bezug zu Fig. 5 ist eine Querschnittsdarstellung von zwei Distanzplatten 13,14 dargestellt, die identische Abmessungen aufweisen. Sie können beispielsweise aus demselben Extrusionswerkzeug stammen. Die Zusammenfassung in dem Stapel gemäß Fig. 5 ist dadurch erreicht, dass die Distanzplatte 13 gegenüber der Distanzplatte 14 gewendet ist ("oben" nach "unten") und - zumindest - um eine Profilierung seitlich versetzt ist.

Die beiden Distanzplatten 13,14 weisen denselben Grund-Profilabschnitt 8 und denselben Spitzen-Profilabschnitt 6 auf, d.h. die Länge L des Grund-Profilabschnitts 8 beider Distanzplatten 13,14 ist dieselbe und die Länge 1 der Spitzen-Profilabschnitte 6 beider Distanzplatten 13,14 ist dieselbe. Im Hinblick auf die angegebene Möglichkeit, dass die Distanzplatten 13,14 aus demselben Werkzeug stammen, ist bevorzugt auch die Höhe H dieselbe.

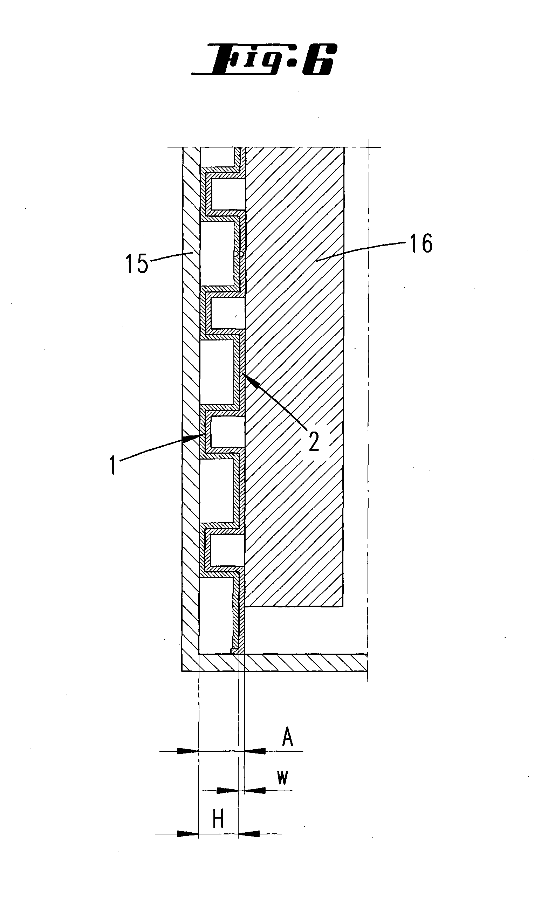

Die Zusammenfassung gemäß Fig. 5 ist aber ersichtlich auch in einer Abwandlung derart möglich, dass zwar die Längen der Grund-Profilabschnitte 8 und der Spitzen-Profilabschnitte 6 der beiden Distanzplatten 13,14 unterschiedlich sind, wie auch schon beschrieben, jedoch die Höhe H einer Distanzplatte 13 unterschiedlich von der Höhe H einer Distanzplatte 14 ist. Dann können diese Distanzplatten nicht mehr aus demselben Formwerkzeug stammen, sind aber ansonsten, mit Ausnahme der genannten Höhen H, maßlich übereinstimmend. Hierdurch lassen sich nochmals günstige Variationsmöglichkeiten im Hinblick auf eine distanzierende Einsetzung in Batteriezellen, wie nachstehend noch in Bezug zu Fig. 6 erläutert, erreichen.

Mit Bezug zu Fig. 6 ist schematisch eine Querschnittsansicht einer Einsatzsituation von Distanzplatten 1, 2 in einer Batteriezelle wiedergegeben. Die Batteriezelle weist eine Wandung 15 auf und beispielhaft ist eine Elektrodenplatte 16 dargestellt. Die Elektrodenplatte 16 ist gegenüber der Wandung 15 durch die zwei ineinandergeschachtelt angeordneten Distanzplatten 1, 2 beabstandet. Hierbei ist der Abstand A durch die Höhe H der Distanzplatte 1, ergänzt um die Wandstärke w der Distanzplatte 2, ausgeglichen. In gleicher Weise kann auch, wenn auch nicht im Einzelnen dargestellt, ein entsprechender Abstand zwischen zwei Elektrodenplatten 16 ausgeglichen sein. Zudem ist es auch möglich, wenn etwa noch größere Abstände zu überwinden sind, (zusätzlich) zwei Distanzplatten so anzuordnen, dass sich ihre Höhen H addieren, wie dies etwa prinzipiell in den Figuren 5 und 6 der DE 10 2008 037 040 A1 dargestellt ist.

**Bezugszeichenliste**

| | | | |
|---|---|---|---|
| 1 | Batteriezellen-Distanzplatten | | |
| 2 | Batteriezellen-Distanzplatten | | |
| 3 | Profilausformung | | |
| 4 | Profilausformung | | |
| 5 | Profilabschnitt | | |
| 6 | Profilabschnitt | | |
| 7 | Profilabschnitt | | |
| 8 | Grund-Profilabschnitt | | |
| 9 | Grund-Profilabschnitt | | |
| 10 | Stapel | | |
| 11 | Einkerbung | | |
| 12 | Abwinkelung | | |
| 13 | Distanzplatte | | |
| 14 | Distanzplatte | | |
| 15 | Wandung | | |
| 16 | Elektrodenplatte | | |
| α | Winkel | | |
| A | Abstand | a | Übergriffabschnitt |
| b | Breite | | |
| d | Materialdicke | | |
| E | Erstreckungsebene | | |
| F | Fluchtrichtung | | |
| H | Höhe | h | Höhe |
| L | Länge | l | Länge |
| V | Verschiebeabstand | w | Wandstärke |

## Patentansprüche

1. Zu einem Stapel (10) zusammengefasste Batteriezellen-Distanzplatten (1, 2), wobei eine Distanzplatte eine Vielzahl von in Längsrichtung der Distanzplatte fluchtende Profilausformungen (3, 4) aufweist, wobei weiter eine Profilausformung (3, 4) insbesondere als Rechteckausformung gebildet ist, durch, bezogen auf einen Querschnitt senkrecht zu einer Ebenenerstreckung der Distanzplatten (1, 2), mehrere, bevorzugt unter Einschluss eines Winkels zueinander verlaufende Profilabschnitte (5, 6, 7), und wobei darüber hinaus zumindest ein Grund-Profilabschnitt (8) parallel zu der Ebene (E), in der sich die Distanzplatte (1, 2) erstreckt, verläuft, und Ausformungs-Profilabschnitte (5, 7) sich in einem Winkel α zu der Ebene (E) erstrecken, **dadurch gekennzeichnet, dass** der Stapel (10) bei insgesamt drei oder mehr darin zusammengefassten aufeinanderliegenden, eingeschachtelten Distanzplatten (1, 2) jedenfalls zwei Distanzplatten (1, 2) unterschiedlicher Abmessungen, zumindest bezüglich der Länge (L) der Grund-Profilabschnitte (8,9), aufweist, und dass im Querschnitt eine Distanzplatte (1) erster Abmessung beidseitig von Distanzplatten (2) zweiter Abmessung überdeckt ist.

2. Zu einem Stapel zusammengefasste Batteriezellen-Distanzplatten nach Anspruch 1, **dadurch gekennzeichnet, dass** eine Gesamthöhe (H) einer Distanzplatte (1, 2) erster und zweiter Abmessung gleich ist.

3. Zu einem Stapel zusammengefasste Batteriezellen-Distanzplatten nach einem der vorangehenden Ansprüche, **dadurch gekennzeichnet, dass** in einem Stapel (10) vier oder mehr Distanzplatten (1, 2) zusammengefasst sind, wobei zwei Distanzplatten (2) gleicher Abmessung unmittelbar übereinander liegend und versetzt zueinander angeordnet sind.

4. Zu einem Stapel zusammengefasste Batteriezellen-Distanzplatten nach einem der vorangehenden Ansprüche, **dadurch gekennzeichnet, dass** sich an den Rändern des Stapels (10) jeweils ein Abschnitt ergibt, in dem nur zwei Distanzplatten (1, 2) übereinander liegen.

5. Zu einem Stapel zusammengefasste Batteriezellen-Distanzplatten nach einem der vorangehenden Ansprüche, **dadurch gekennzeichnet, dass** die jeweils zwei Distanzplatten (1, 2) gegeneinander gerichtet in dem Stapel zusammengefasst sind.

6. Zu einem Stapel (10) zusammengefasste Batteriezellen-Distanzplatten (1, 2) nach einem der vorhergehenden Ansprüche, **dadurch gekennzeichnet, dass** der Grund-Profilabschnitt (9) länger ist als ein Spitzen-Profilabschnitt.

## Claims

1. Battery cell spacer plates (1, 2) combined to form a stack (10), a spacer plate comprising a plurality of profile moulded parts (3, 4) which are aligned with the spacer plate in the longitudinal direction, a profile moulded part (3, 4) further being formed in particular as a rectangular moulded part by a plurality of profile portions (5, 6, 7) which extend, in relation to a cross section, perpendicularly with respect to a planar extension of the spacer plates (1, 2) and preferably at an angle to one another, and at least one bottom profile portion (8) in addition extending in parallel with the plane (E) in which the spacer plate (1, 2) extends, and moulded-part profile portions (5, 7) extending at an angle α to the plane (E), **characterised in that**, when altogether there are three or more spacer plates (1, 2) combined in the stack (10), which spacer plates rest on top of one another and are nested together, said stack always comprises two spacer plates (1, 2) which have different dimensions, at least in terms of the length (L) of the bottom profile portions (8, 9), and **in that**, in cross section, a spacer plate (1) of a first dimension is covered on either side by spacer plates (2) of a second dimension.

2. Battery cell spacer plates combined to form a stack according to claim 1, **characterised in that** an overall height (H) of a spacer plate (1, 2) of a first and second dimension is the same.

3. Battery cell spacer plates combined to form a stack according to either of the preceding claims, **characterised in that** four or more spacer plates (1, 2) are combined in a stack (10), two spacer plates (2) of the same dimension being located directly one above the other and arranged at an offset from one another.

4. Battery cell spacer plates combined to form a stack according to any of the preceding claims, **characterised in that** a portion is produced at each edge of the stack (10) in which only two spacer plates (1, 2) are located one above the other.

5. Battery cell spacer plates combined to form a stack according to any of the preceding claims, **characterised in that** each two spacer plates (1, 2) are combined in the stack so as to face one another.

6. Battery cell spacer plates (1, 2) combined to form a stack (10) according to any of the preceding claims, **characterised in that** the bottom profile portion (9) is longer than a top profile portion.

## Revendications

1. Plaques d'écartement (1, 2) de cellules de batterie assemblées dans une pile (10), une plaque d'écartement présentant une pluralité de formations de profil (3, 4) en alignement dans la direction longitudinale, en outre une formation de profil (3, 4) étant en particulier réalisée comme formation rectangulaire au moyen de plusieurs sections de profil (5, 6, 7), de préférence en incluant un angle l'une par rapport à l'autre, passant par rapport à une section transversale perpendiculairement à une extension plane des plaques d'écartement (1, 2), et par ailleurs au moins une section de profil de base (8) s'étendant parallèlement au plan (E) dans lequel la plaque d'écartement (1, 2) s'étend et des sections de profil (5, 7) des formations s'étendant dans un angle α par rapport au plan (E), **caractérisées en ce que** la pile (10) présente, pour un total de trois plaques d'écartement (1, 2) ou davantage emboîtées, superposées et assemblées dans cette pile, à chaque fois deux plaques d'écartement (1, 2) de dimensions différentes, au moins en ce qui concerne la longueur (L) des sections de profil de base (8, 9), et **en ce que** dans une vue en section transversale, une plaque d'écartement (1) d'une première dimension est recouverte des deux côtés par des plaques d'écartement (2) d'une deuxième dimension.

2. Plaques d'écartement de cellules de batterie assemblées dans une pile selon la revendication 1, **caractérisées en ce qu'**une hauteur totale (H) d'une plaque d'écartement (1, 2) des première et deuxième dimensions est identique.

3. Plaques d'écartement de cellules de batterie assemblées dans une pile selon l'une des revendications précédentes, **caractérisées en ce que** quatre plaques d'écartement (1, 2) ou davantage sont assemblées dans une pile (10), deux plaques d'écartement (2) de la même dimension étant superposées directement et agencées en décalage l'une par rapport à l'autre.

4. Plaques d'écartement de cellules de batterie assemblées dans une pile selon l'une des revendications précédentes, **caractérisées en ce que** sur les bords de la pile (10), on obtient à chaque fois une section dans laquelle deux plaques d'écartement (1, 2) seulement sont posées l'une sur l'autre.

5. Plaques d'écartement de cellules de batterie assemblées dans une pile selon l'une des revendications précédentes, **caractérisées en ce que** les deux plaques d'écartement (1, 2) respectives sont assemblées dans la pile en étant orientées l'une vers l'autre.

6. Plaques d'écartement (1, 2) de cellules de batterie assemblées dans une pile (10) selon l'une des revendications précédentes, **caractérisées en ce que** la section de profil de base (9) est plus longue d'une section de profil de pointe.
